# EUROPÄISCHE PATENTSCHRIFT

(11) **EP 1 224 510 B1**
(45) Veröffentlichungstag und Bekanntmachung des Hinweises auf die Patenterteilung: **03.09.2003**
(21) Anmeldenummer: 00987026.2
(22) Anmeldetag: 25.10.2000
(51) Int. Cl.: G05B 19/042

(54) **SYSTEM UND VERFAHREN ZUM VERHINDERN VON UNBERECHTIGTEM ZUGRIFF AUF MODULE, INSBESONDERE BEI AUTOMATISIERUNGSSYSTEMEN**
SYSTEM AND METHOD FOR PREVENTING UNAUTHORIZED ACCESS TO MODULES, ESPECIALLY IN AUTOMATION SYSTEMS
SYSTEME ET PROCEDE DESTINES A EMPECHER L'ACCES NON AUTORISE A UN MODULE, NOTAMMENT DANS DES SYSTEMES AUTOMATISES

(30) Priorität: 25.10.1999 US 425029
(43) Veröffentlichungstag der Anmeldung: 24.07.2002
(73) Patentinhaber: SIEMENS AKTIENGESELLSCHAFT, 80333 München (DE)
(72) Erfinder: TEN BRINK, Carsten, 48455 Bad Bentheim (DE)
(86) Internationale Anmeldenummer: DE0003769
(87) Internationale Veröffentlichungsnummer: WO01031407

(56) Entgegenhaltungen:
- EP-A- 0 612 004
- EP-A- 0 936 515
- DE-A- 4 226 536
- US-A- 5 319 783
- US-A- 5 566 176

## Beschreibung

Die Erfindung betrifft ein System und ein Verfahren zum Verhindern von unberechtigtem Zugriff auf Module, insbesondere bei Automatisierungssystemen.

Aus der EP 0 936 515 A1 ist eine Vorrichtung zum Steuern eines Geräts bekannt, die einen ersten Mikroprozessor aufweist, der einen ersten Speicher besitzt, in dem eine erste Kennung hinterlegt ist. Der erste Mikroprozessor gibt in einem Normalbetrieb erste Signale und in einer Sicherheitsabschaltung zweite Signale an ein Gerät ab. Er tauscht mit zumindest einem zweiten Mikroprozessor Daten aus, wobei der zweite Mikroprozessor einen zweiten Speicher aufweist, in dem eine zweite Kennung hinterlegt ist. Der Normalbetrieb ist nur dann zugelassen, wenn die erste Kennung mit der zweiten Kennung übereinstimmt.

Die DE 42 26 536 A1 beschreibt eine speicherprogrammierbare Steuerung, welche in Abhängigkeit von einem gespeicherten Steuerprogramm, das auf einem Kontaktplan beruht, den Status von Eingabevorrichtungen überprüft und den Zustand von Betätigungsvorrichtungen steuert. Ein Speicher der Steuerung enthält Nachrichtendaten und Daten, die einen Satz erwarteter Übergänge im Status von ausgewählten Eingabevorrichtungen definieren. Eine den Kontaktplan betreffende Anweisung löst die Ausführung eines Maschinensprachennachrichtenprogramms aus, das die speicherprogrammierbare Steuerung veranlasst, die Zustände der ausgewählten Eingabevorrichtungen mit dem Ziel zu überprüfen, ob ein erwarteter Übergang aufgetreten ist. Trifft dies zu, werden die Nachrichtendaten und eine Identifikation der ausgewählten Eingabevorrichtung zu einem mit der speicherprogrammierbaren Steuerung verbundenen Personal Computer übertragen. Der Personal Computer verwendet die von der speicherprogrammierbaren Steuerung empfangenen Daten zur Formulierung einer alphanumerischen Nachricht, die auf einem Anzeigegerät dem Benutzer dargeboten wird.

Der Erfindung liegt die Aufgabe zugrunde, auf einfache und sichere Weise den Zugriff auf Module, insbesondere im Bereich der Automatisierungstechnik zu steuern.

Diese Aufgabe wird durch ein Automatisierungssystem, ein Gerät eines Automatisierungssystems sowie eine Zentraleinheit eines Automatisierungssystems mit den im Anspruch 1, Anspruch 4 bzw. Anspruch 7 angegebenen Merkmalen gelöst.

Ein derartiges System und Verfahren eröffnet eine Möglichkeit, nicht berechtigten Wettbewerbern etc. die Möglichkeiten des Anschlusses an die entsprechende Systeme zu verwehren. Der Erfindung liegt die Erkenntnis zugrunde, lediglich bestimmte Geräte zum Betrieb in Automatisierungssystemen, insbesondere den Automatisierungssystemen/-geräten der so genannten SIMATIC-Baureihe zuzulassen.

Bei Automatisierungssystemen ist es üblich, dass die Zentraleinheit den Ausbaugrad, d.h. Anzahl, Art und Funktionalität der angeschlossenen Geräte ermittelt. Dies geschieht im Rahmen einer dafür vorgesehenen Datenübertragung zwischen der Zentraleinheit und jedem angeschlossenen Gerät. Wenn nun im Rahmen einer bei solchen Gelegenheiten ohnehin erforderlichen Datenübertragung die angeschlossenen Geräte an die Zentraleinheit zusätzlich einen Text im Sinne von "ich bin eine original Siemens-Baugruppe" übermitteln würden, könnte die Zentraleinheit das Vorhandensein dieses Textes in den jeweils empfangenen Daten überprüfen und den Betrieb mit Geräten, die diesen Text nicht senden, verweigern.

Wettbewerber, die, um sich an die jeweiligen Systeme anzukoppeln, die entsprechenden Baugruppen und deren Funktionalität kopieren würden, begingen eine Wettbewerbswidrigkeit (§1 UWG), wenn deren Baugruppen auch den obengenannten Text übers mitteln würden. - Andererseits würde eine Wettbewerberbaugruppe, die diesen Text nicht übermittelt, in unserem System nicht akzeptiert.

Kurzgefaßt läuft die Erfindung damit darauf hinaus, in den Automatisierungssystemen ein Verfahren der oben beschriebenen Art vorzusehen, das ein Wettbewerber zum Betrieb seiner Baugruppen in diesen Systemen identisch kopieren müßte, das er aber nicht kopieren kann, ohne zumindest gegen die Vorschriften des Gesetzes gegen unlauteren Wettbewerb (UWG) zu verstoßen. - Eine "unentrinnbare Falle" für den Wettbewerber.

Das Gesetz gegen unlauteren Wettbewerb eröffnet mit Blick auf das Patentgesetz grundsätzlich vergleichbare Möglichkeiten, gegen einen Wettbewerber vorzugehen. Insbesondere besteht ein 20 Anspruch auf Unterlassung, Schadensersatz, etc. - Die nach §1 UWG erforderliche zusätzliche Unlauterkeit müßte sich leicht mit dem Hinweis auf erhöhte Sicherheitsanforderungen an Automatisierungssysteme begründen lassen: Die Siemens AG kann selbstverständlich nur für eigene Baugruppen die Garantie für die Erfüllung dieser Anforderungen übernehmen. Der Betrieb von Fremdbaugruppen stellt somit latent die Funktionssicherheit des Gesamtsystems in Frage. Dies rechtfertigt damit einerseits die Einführung/Überprüfung der Kennung selbst und bildet eine breite Basis für die Argumentation hinsichtlich des zusätzlichen Unlauterkeitstatbestands beim Vorgehen gegen einen Wettbewerber,

Mit Anbietern, denen die Siemens AG - etwa im Rahmen eines Partner-Konzepts - den Betrieb ihrer jeweiligen Baugruppen in den entsprechenden Systemen gestatten würde, könnte ein eineindeutiger Schlüssel vereinbart werden (etwa: "im Rahmen ... zugelassene Baugruppe"), der von anderen Wettbewerbern nur im Konflikt mit §1 UWG kopiert werden könnte. Die Erfindung könnte z.B. auch beim Betrieb von Speichermodulenin Verbindung mit Automatisierungsgeräten verwendet werden, nachdem auch diese Speichermodule vermehrt weitgehend identisch nachgebaut werden.

Weitere Merkmale, Vorteile und Anwendungsmöglichkeiten der Erfindung ergeben sich aus den Unteransprüchen, der nachfolgenden Beschreibung eines Ausführungsbeispiels, anhand der Figuren und der Figuren selbst.

Dabei bilden alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung.

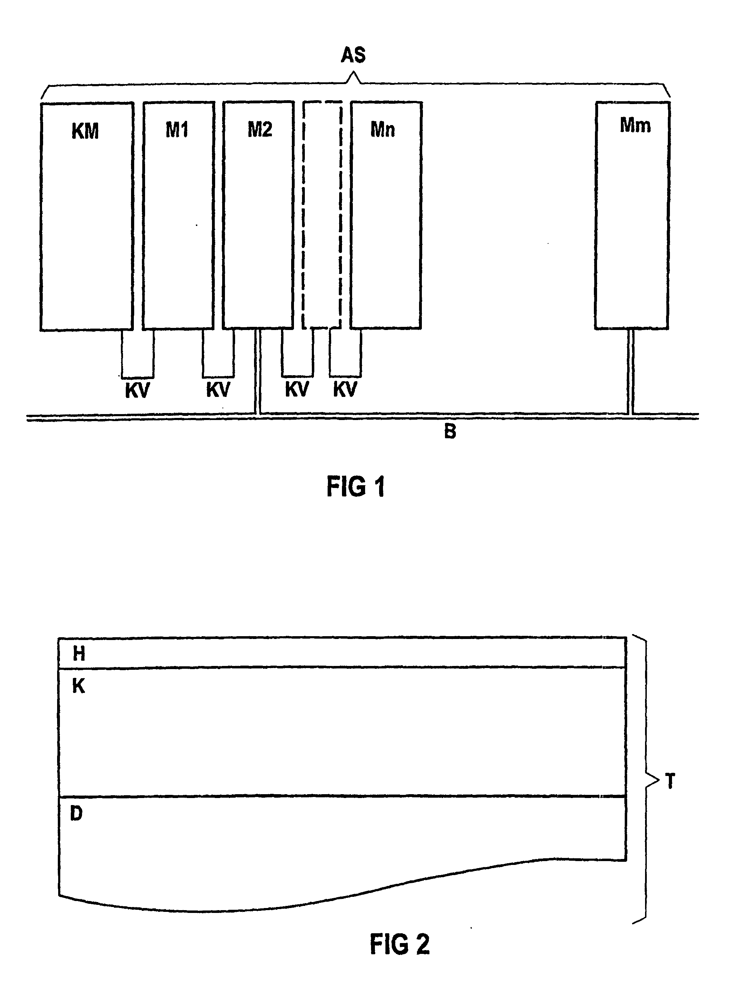

FIG 1 zeigt schematisch eine Einrichtung zur Steuerung und/oder Überwachung eines nicht dargestellten externen technischen Prozesses.

Bei der Einrichtung handelt es sich um ein Automatisierungssystem AS mit einem zentralen Kopfmodul KM, an das über Kommunikationsverbindungen KV weitere Module M1, M2, , Mn anschließbar sind. Die Kommunikationsverbindung KV kann dabei ein so genannter Rückwandbus sein, also z.B. eine entsprechend gehalterte oder halterbare Leiterplatte mit Steckplätzen, an denen die einzelnen Geräte KM, M1, M2, Mn aufsteckbar sind. Ferner ist als Kommunikationsverbindung KV eine Verbindung zwischen den einzelnen Geräten KM, M1, M2, Mn mittels einer entsprechenden Kabelverbindung, z.B. über Flachbandkabel, denkbar. Theoretisch kommt als Kommunikationsverbindung KV sogar eine leitungslose Datenübertragung in Frage, indem z.B. eine induktive oder kapazitive Kopplung ausgenutzt wird. Die Geräte können auch über ein herkömmliches Bussystem B miteinander kommunikativ verbunden sein, wie dies in FIG 1 mit dem Modul M2 angedeutet ist, das einen Anschluss für einen externen Bus B, z.B. einen Feldbus B, insbesondere den so genannten Profibus B, aufweist, wobei an diesen Bus B weitere Module Mm, die zur Steuerung und/oder Überwachung des externen technischen Prozesses dienen können, anschließbar sind. Das Modul Mm kann dabei insbesondere ein Modul sein, das direkt im technischen Prozess, z.B. an einer zu steuernden und/oder überwachenden Maschine angeordnet ist.

Das in FIG 1 als Kopfmodul KM dargestellte Gerät KM ist üblicherweise eine so genannte Zentraleinheit einer speicherprogrammierbaren Steuerung, d.h. derjenige Teil der speicherprogrammierbaren Steuerung, die zumindest den Prozessor und üblicherweise auch den Speicher enthält. Der Prozessor des Kopfmoduls KM arbeitet ein Benutzerprogramm ab, wobei bei dessen Abarbeitung kontinuierlich oder zyklisch Zustände des externen technischen Prozesses eingelesen werden oder Befehle an den externen technischen Prozess abgegeben werden. Wird jetzt zur Verdeutlichung angenommen, dass an das Gerät Mm ein Motor des technischen Prozesses angeschlossen sei und dieser Motor durch das Gerät Mm überwacht und gesteuert wird, so liegen Informationen über den Zustand des Motors als Teil des technischen Gesamtprozesses zunächst im Gerät Mm vor. Die Information gelangt über entsprechende kommunikative Verbindungen B, KV in das Kopfmodul KM und steht damit schließlich im Benutzerprogramm zur weiteren Verarbeitung zur Verfügung. Ganz analog verhält es sich, wenn z.B. der durch das Gerät Mm gesteuerte Motor abgeschaltet werden soll. Diese Information ist zunächst Ergebnis einer Verknüpfung des Benutzerprogramms, das im Kopfmodul KM abläuft. Der Befehl für den Motor gelangt an das den Motor steuernde Gerät Mm über die Kommunikationsverbindungen KV, B.

Zum Austausch derartiger Daten von einem ersten Gerät, z.B. KM zu einem zweiten Gerät M1, M2, Mn, Mm, hier z.B. Mm, er folgt mittels für die jeweiligen Kommunikationsverbindungen KV, B definierter Übertragungsprotokolle. Gemäß einem solchen Übertragungsprotokoll ist zur Übertragung bestimmter Daten eine festgelegte Telegrammstruktur definiert, die exemplarisch, soweit sie für das Verständnis der Erfindung hier erforderlich ist, in FIG 2 dargestellt ist.

Gemäß FIG 2 umfasst das Telegramm T einen Kopf, einen so genannten Header H und schließlich die eigentlichen Nutzdaten D. Das Telegramm kann darüber hinaus weitere Informationen K umfassen. Die Abfolge der Segmente des Telegramms, so wie sie in FIG 2 dargestellt sind, sind nicht notwendigerweise fix, insbesondere können z.B. die Nutzdaten D unmittelbar auf den Header H folgen.

Der Header H umfasst üblicherweise Informationen über den Sender und den Empfänger eines Telegramms T. Zum Abschalten des an das Gerät Mm angeschlossenen Motors gemäß dem weiter oben bereits verwendeten Beispiel würde das Gerät KM ein Telegramm T an das Gerät Mm senden und damit der Header H entsprechend als Sender des Telegramms T das Gerät KM und als Empfänger des Telegramms T das Gerät Mm ausweisen. Ferner enthält der Header H üblicherweise eine Information über die Länge des Telegramms bzw. Hinweise auf eventuelle Folgetelegramme, wenn der Umfang der Nutzdaten D eine vorgegebene Maximalgröße des Telegramms überschreitet.

Wenn, wie dies bei einigen Übertragungsprotokollen vorgegeben ist, im Telegrammheader H der Empfänger des Telegramms T eindeutig spezifiziert ist, reagiert nur der im Telegramm T spezifizierte Empfänger auf das Telegramm T und wertet die Nutzdaten D aus.

Für spezielle Anwendungsfälle ist eine zusätzliche Sicherheitsabfrage wünschenswert, die sicherstellt, dass eine Nachricht nicht nur bei einem bestimmten Empfänger eingeht, sondern zusätzlich auch garantiert, dass das Telegramm T vom jeweiligen Empfänger auch adäquat behandelt wird oder dass der Empfänger in der Lage ist, das Telegramm T adäquat zu behandeln.

Wenn von einem Automatisierungsvorhaben z.B. zur Steuerung eines chemischen Prozesses ausgegangen wird, kann für bestimmte Geräte Mm erforderlich sein, dass diese bestimmte Spezifikationen erfüllen. Als Spezifikation könnte man sich z.B. vorstellen, dass es sich um so genannte eigensichere Geräte handelt, dass die Geräte explosionsgeschützt sind oder dass die Geräte eine bestimmte Schutzart erfüllen.

Wenn für das Gerät Mm zum Anschluss an das Steuerungsund/oder Überwachungssystem ein Busanschluss zum Anschluss des Bussystems B vorgesehen ist, wäre an das Bussystem B ohne weiteres auch ein Gerät anschließbar, das diese Spezifikationen nicht erfüllt. Wenn also fälschlich für das Gerät Mm ein Gerät gewählt wird, das diese Spezifikationen nicht erfüllt, und an das Bussystem B angeschlossen∼wird, so kann das Automatisierungsgesamtsystem AS durchaus in Betrieb gehen, schwerwiegende Fehler, z.B. in einer explosionsgefährdeten Umgebung, können sich dann aber im Betrieb ergeben, wenn das Gerät Mm nicht explosionsgeschützt ist.

Damit derartige Konstellationen nicht auftreten können und der Ingenieur, der die Geräte anschließt, nicht in der irrigen Annahme belassen wird, die von ihm vorgesehene Konfiguration sei unbedenklich, ist es gemäß der Erfindung vorgesehen, dass Informationen über die Spezifikation einzelner Geräte in den Telegrammen z.B. im Rahmen der Kennung K übermittelt werden.

Im oben gewählten Beispiel könnte die Kennung K als ASCII String eine Information der Art "Schutzart IP 65", "explosionsgeschützt", "eigensicher", etc. umfassen. Das Kopfmodul KM würde beim Empfang von Telegrammen vom Gerät Mm die Kennung K des Telegramms jeweils auswerten und für den Fall, dass die Kennung K keinen Hinweis auf die erforderlichen Spezifikationen enthält, den weiteren Betrieb mit dem entsprechenden entfernten Gerät Mm einstellen. Fehlt z.B. in der Kennung K die Information "explosionsgeschützt", so würde spätestens nach der ersten Kommunikation des Kopfmoduls KM mit dem Gerät Mm im Kopfmodul KM die Information vorliegen, dass das Gerät Mm gerade nicht explosionsgeschützt ist und es könnte vom im Kopfmodul KM ablaufenden Benutzerprogramm eine entsprechende Fehlermeldung generiert werden. Der Ingenieur, der irrtümlich ein nicht den erforderlichen Spezifikationen entsprechendes Gerät Mm angeschlossen hat, ist damit sofort informiert, welche Maßnahmen zur Behebung des aktuellen Zustands zu treffen sind.

Es kann auch vorkommen, dass eine bestimmte Kommunikationsverbindung erstmalig zu einem vergleichsweise späten Zeitpunkt bei der Steuerung und/oder Überwachung des technischen Prozesses genutzt wird. Dies kann - immer wieder im Kontext des vorstehenden Beispiels - für den Fall eines nicht explosionsgeschützten Gerätes Mm bereits dann zu gefährlichen Situationen führen, wenn bis zu dem Zeitpunkt, zu dem die Kommunikationsverbindung zu dem Gerät Mm erstmalig genutzt wird, schon eine explosionsgefährliche Konstellation vorliegt, indem etwa ein Reaktor mit einem explosiven Gasgemisch gefüllt wird. Nachdem aber bei verteilten Automatisierungssystemen AS, wie dieses schematisch in FIG 1 dargestellt ist, es üblicherweise eine Voraussetzung ist, dass beim Einschalten oder beim erstmaligen so genannten Hochlauf des Automatisierungssystems der Ausbaugrad des Automatisierungssystems ermittelt wird, und im Rahmen der Ermittlung des Ausbaugrades die Zentraleinheit, das Kopfmodul KM, jedes angeschlossene Gerät M1, M2, Mn, Mm anspricht und vom jeweiligen Gerät zumindest Informationen über dessen Funktionalität, z.B. Eingabebaugruppe, Ausgabebaugruppe, digitale Eingabebaugruppe mit 32 Eingängen, analoge Ausgabebaugruppe mit 8 Ausgängen und einer Auflösung von jeweils 16 Bit, etc. erhält, kann bereits zu diesem Zeitpunkt, also bei der Ermittlung des Ausbaugrades, die oben beschriebene Kennung K übermittelt und überprüft werden. Wird die Kennung K bereits zu diesem Zeitpunkt übermittelt und überprüft und ein Betrieb mit einem Gerät abgewiesen, das nicht die erwartete Kennung K sendet, ist sichergestellt, dass ein Automatisierungssystem, das nicht in allen seinen Komponenten die erforderlichen Konstellationen und Spezifikationen aufweist, gar nicht erst in Betrieb geht.

Eine grundsätzlich ähnliche Konstellation liegt vor, wenn an eine Kommunikationsverbindung KV Geräte unterschiedlicher Leistungsklassen angeschlossen werden können. Nachdem es sich bei Busanschlüssen üblicherweise um normierte Kontaktstellen handelt, ist es technisch durchaus möglich, an einen Bus B, z.B. an die Stelle einer digitalen Eingabebaugruppe, für die der Hersteller aufgrund spezifischer Maßnahmen beim Herstellungsprozess eine bestimmte minimale Zeitspanne zwischen dem Auftreten zweier Fehler (Meantime Between Failure - MTBF) garantiert, auch ein Gerät anzuschließen, das diese Spezifikationen nicht erfüllt, dafür aber gegebenenfalls am Markt günstiger erwerblich ist. Die Kennung K des Telegramms kann alternativ oder zusätzlich zu den bereits beschriebenen Informationen auch Informationen über derartige Charakteristika des Gerätes enthalten, z.B. "MTBF = 103 h".

Ein weiteres Einsatzgebiet der vorliegenden Erfindung besteht darin, einem Anbieter von Automatisierungssystemen AS der in FIG 1 schematisch dargestellten Art die Möglichkeit zu geben, sicherzustellen, dass im Automatisierungssystem nur solche Geräte verwendet werden, die die Spezifikationen erfüllen, die gemäß den durch den jeweils zu automatisierenden technischen Prozess vorgegebenen Randbedingungen entsprechen.

Wenn z.B. Geräte eines Fremdherstellers aufgrund ihrer Hardware- oder Software-Schnittstelle an das Automatisierungssystem AS grundsätzlich anschließbar sind, kann ein Gerät eines Fremdherstellers die dauerhafte Funktionstüchtigkeit des Automatisierungsgesamtsystems AS aufgrund anderer Leistungsmerkmale, anderer Ausführung des jeweiligen technischen Gerätes, etc. in Frage stellen und damit gegebenenfalls auch gefährliche Situationen, wenn z.B. wenn eine Anlage oder ein Anlagenteil nicht rechtzeitig abgeschaltet wird, heraufbeschwören.

Ein Fremdhersteller, der aufgrund seines Geschäftes darauf angewiesen ist, seine Geräte als Zusatz- oder Ersatzgeräte zum Anschluss an das Automatisierungssystem eines anderen Herstellers anzubieten, wird für den Fall, dass, wie oben beschrieben, entsprechende Kennungen K übermittelt und überprüft werden, sein jeweiliges Gerät entsprechend auslegen, dass das Gerät die Kennung entsprechend den jeweiligen Vorgaben übermittelt und damit wieder ein Betrieb des Gerätes des Fremdherstellers im Automatisierungssystem AS ermöglicht wird.

Der eigentlich beabsichtigte Sicherheitsgewinn - in Bezug auf die dauerhafte Funktionstüchtigkeit der Automatisierung - um gerade solche Geräte ausschließen zu können, die bestimmte erforderliche Spezifikationen nicht erfüllen, wäre damit wieder zunichte gemacht.

Daher ist es erfindungsgemäß vorgesehen, dass die Kennung zumindest auch einen Abschnitt enthält, die ein Wettbewerber nicht kopieren kann, ohne in Konflikt mit entsprechenden Schutzgesetzen - in Deutschland z.B. Gesetz gegen unlauteren Wettbewerb UWG - zu gelangen.

Die Anmelderin der vorliegenden Erfindung vertreibt das weltweit bekannte Automatisierungssystem SIMATIC in unterschiedlichen Leistungsklassen. Um sicherzustellen, dass an ein SIMATIC-Automatisierungssystem nur entweder SIMATIC-Komponenten oder solche Komponenten, deren dauerhafter und reibungsloser Einsatz in SIMATIC-Automatisierungssystemen in entsprechenden Zertifizierungsprozessen nachgewiesen ist, könnte die Kennung K z.B. die folgende Form haben: "SIMATIC-Original-Komponente: xxx-yyyyy-zzzzzz", wobei xxx, yyyyy und zzzzzz das jeweilige Gerät identifiziert und damit z.B. in erster Näherung einer Bestellnummer oder einer Artikelbezeichnung entspricht. Ein Fremdhersteller, der sein Gerät technisch ertüchtigt, eine Kennung in der Form "SIMATIC-Original-Komponente ..." zu senden, kann diese damit verbundene "Behauptung" nicht wahrheitsgemäß treffen, denn bei seinem Gerät handelt es sich ja gerade nicht um eine Original-SIMATIC-Komponente, sondern eben um ein entsprechendes Derivat eines Fremdherstellers.

Geräte von Fremdherstellern, die nach entsprechenden Zertifizierungsmaßnahmen zum Betrieb im SIMATIC-Automatisierungs-System vorgesehen sind, könnten zwar nicht die Kennung "SIMATIC-Original-Komponente ..." senden, da es sich ja immer noch um Geräte von Fremdherstellern handelt, die mithin damit keine "Originalkomponenten" herstellen; es könnte aber als Kennung K ein String in der Form "gemäß Zertifizierung nnnnnnnnn zugelassene Baugruppe", wobei nnnnnnnnn ein Aktenzeichen der Zertifizierungsmaßnahme oder einen Bezug auf eine Mitteilung, mit dem der Hersteller des Automatisierungssystems dem Fremdhersteller die Zertifizierung seines Gerätes im Automatisierungsgesamtsystem bestätigt, bezeichnet.

## Patentansprüche

1. Automatisierungssystem (AS) mit einer Zentraleinheit (KM) und mindestens einem mit der Zentraleinheit (KM) verbindbaren Gerät (Mm), wobei das Gerät (M1..Mn) Mittel zum Senden einer Kennung (K) an die Zentraleinheit (KM) und die Zentraleinheit (KM) Mittel zur Auswertung der von dem Gerät (Mm) gesendeten Kennung (K) in der Weise aufweist, dass die jeweils empfangene Kennung (K) mit mindestens einer in der Zentraleinheit (KM) gespeicherten Vergleichskennung verglichen wird und bei Nichtübereinstimmung der empfangenen Kennung mit der Vergleichskennung die Zentraleinheit (KM) einen Betrieb des Geräts (Mm) an dem System verweigert,
**dadurch gekennzeichnet,**
**dass** die Kennung (K) einen rechtlich geschützten Begriff enthält.

2. System nach Anspruch 1,
wobei die Zentraleinheit (Km) ein Kopfmodul eines Automatisierungssystems und das Gerät (Mm) ein Modul des Automatisierungssystems sind.

3. System nach einem der Ansprüche 1 oder 2,
wobei die Kennung (K) zur Kennzeichnung einer speziellen Spezifikation des Geräts (Mm) vorgesehen ist.

4. Gerät (Mm) eines Automatisierungssystems (AS) mit Mitteln zum Senden einer Kennung (K) an eine Zentraleinheit (KM) des Automatisierungssystems, wobei die Kennung (K) zur Auswertung durch die Zentraleinheit (KM) in der Weise vorgesehen ist, dass bei Nichtübereinstimmung der empfangenen Kennung mit mindestens einer in der Zentraleinheit (KM) gespeicherten Vergleichskennung die Zentraleinheit (KM) einen Betrieb des Moduls (Mm) an dem System verweigert,
**dadurch gekennzeichnet,**
**dass** die Kennung (K) einen rechtlich geschützten Begriff enthält.

5. Gerät nach Anspruch 4,
**dadurch gekennzeichnet,**
**dass** das Gerät ein Modul des Automatisierungssystems ist.

6. Gerät nach Anspruch 4 oder 5,
**dadurch gekennzeichnet,**
**dass** die Kennung (K) zur Kennzeichnung einer speziellen Spezifikation des Geräts (Mm) vorgesehen ist.

7. Zentraleinheit (KM) eines Automatisierungssystems (AS) mit Mitteln zur Auswertung einer von einem an das Automatisierungssystem (AS) angeschlossenen Gerät (Mm) gesendeten Kennung (K), wobei die jeweils empfangene Kennung (K) mit mindestens einer in der Zentraleinheit (KM) gespeicherten Vergleichskennung verglichen wird und bei Nichtübereinstimmung der empfangenen Kennung mit der Vergleichskennung die Zentraleinheit (KM) einen Betrieb des Geräts (Mm) an der Zentraleinheit (Km) verweigert,
**dadurch gekennzeichnet,**
**dass** die Kennung (K) einen rechtlich geschützten Begriff enthält.

8. Zentraleinheit nach Anspruch 7,
**dadurch gekennzeichnet,**
**dass** die Zentraleinheit (Km) ein Kopfmodul eines Automatisierungssystems ist.

## Claims

1. An automation system (AS) comprising a central processing unit (KM) and having at least one first device (Mm) which can be connected to the central processing unit (KM), the device (M1..Mn) having means for transmitting an identifier (K) to the central processing unit (KM) and the central processing unit (KM) having means for evaluating the identifier (K) transmitted by the device (Mm) in such a manner that the identifier (K) received in each case is compared with at least one reference identifier stored in the central processing unit (KM) and if the received identifier does not match the reference identifier the central processing unit (KM) refuses operation of the first device (Mm) on the system,
**characterised in that**
the identifier (K) contains a legally protected term.

2. The system as claimed in claim 1, the central processing unit (KM) being a head module of an automation system and the device (Mm) being a module of the automation system.

3. The system as claimed in one of the claims 1 or 2, the identifier (K) being provided for identifying a special specification of the device (Mm).

4. A device (Mm) of an automation system (AS) having means for transmitting an identifier (K) to a central processing unit (KM) of the automation system, the identifier (K) being provided for evaluation by the central processing unit (KM) in such a manner that if the received identifier does not match at least one reference identifier stored in the central processing unit (KM) the central processing unit (KM) refuses operation of the device (Mm) on the system.
**characterised in that**
the identifier (K) contains a legally protected term.

5. The device as claimed in claim 4 **characterised in that**
the device is a module of the automation system.

6. The device as claimed in claim 4 or 5, **characterised in that**
the identifier (K) is provided for identifying a special specification of the device (Mm).

7. A central processing unit (KM) of an automation system (AS) having means for evaluating an identifier (K) transmitted by a device (Mm) connected to the automation system (AS), the identifier (K) received in each case being compared with at least one reference identifier stored in the central processing unit (KM) and if the received identifier does not match the reference identifier the central processing unit (KM) refuses operation of the device (Mm) on the central processing unit (KM), **characterised in that** the identifier (K) contains a legally protected term.

8. The central processing unit as claimed in claim 7,
**characterised in that**
the central processing unit (KM) is a head module of an automation system.

## Revendications

1. Système d'automatisation (AS) comportant une unité centrale (KM) et au moins un appareil (Mm) pouvant être relié à l'unité centrale (KM), l'appareil (M1 à Mn) comportant des moyens pour émettre un identificateur (K) vers l'unité centrale (KM) et l'unité centrale (KM) comportant des moyens pour évaluer l'identificateur (K) émis par l'appareil (Mm) de telle sorte que l'identificateur (K) respectivement reçu est comparé à au moins un identificateur de comparaison mémorisé dans l'unité centrale (KM) et, si l'identificateur reçu ne coïncide pas avec l'identificateur de comparaison, l'unité centrale (KM) refuse un fonctionnement de l'appareil (Mm) sur le système,
**caractérisé par le fait que** l'identificateur (K) contient un terme protégé juridiquement.

2. Système selon la revendication 1,
dans lequel l'unité centrale (KM) est un module de tête d'un système d'automatisation et l'appareil (Mm) un module du système d'automatisation.

3. Système selon l'une des revendications 1 ou 2,
dans lequel l'identificateur (K) est prévu pour caractériser une spécification spéciale de l'appareil (Mm).

4. Appareil (Mm) d'un système d'automatisation (AS) comportant des moyens pour émettre un identificateur (K) vers une unité centrale (KM) du système d'automatisation, l'identificateur (K) étant prévu pour l'évaluation par l'unité centrale (KM) de telle sorte que, si l'identificateur reçu ne coïncide pas avec au moins un identificateur de comparaison mémorisé dans l'unité centrale (KM), l'unité centrale (KM) refuse un fonctionnement du module (Mm) sur le système,
**caractérisé par le fait que** l'identificateur (K) contient un terme protégé juridiquement.

5. Appareil selon la revendication 4,
**caractérisé par le fait que** l'appareil est un module du système d'automatisation.

6. Appareil selon la revendication 4 ou 5,
**caractérisé par le fait que** l'identificateur (K) est prévu pour caractériser une spécification spéciale de l'appareil (Mm).

7. Unité centrale (KM) d'un système d'automatisation (AS) comportant des moyens pour évaluer un identificateur (K) émis par un appareil (Mm) raccordé au système d'automatisation (AS), l'identificateur (K) respectivement reçu étant comparé à au moins un identificateur de comparaison mémorisé dans l'unité centrale (KM) et, si l'identificateur reçu ne coïncide pas avec l'identificateur de comparaison, l'unité centrale (KM) refusant un fonctionnement de l'appareil (Mm) sur l'unité centrale (KM),
**caractérisé par le fait que** l'identificateur (K) contient un terme protégé juridiquement.

8. Unité centrale selon la revendication 7,
**caractérisée par le fait que** l'unité centrale (KM) est un module de tête d'un système d'automatisation.
